# EUROPÄISCHE PATENTSCHRIFT

(11) **EP 1 673 540 B1**
(45) Veröffentlichungstag und Bekanntmachung des Hinweises auf die Patenterteilung: **26.11.2008**
(21) Anmeldenummer: 04765199.7
(22) Anmeldetag: 15.09.2004
(51) Int. Cl.: F15B 13/00, F16K 27/00

(54) **VERTEILERMODUL FÜR VENTILBATTERIEN UND VENTILBATTERIE**
DISTRIBUTION MODULE FOR VALVE STACKS AND A VALVE STACK
MODULE DE DISTRIBUTION CON U POUR DES BATTERIES DE SOUPAPES, ET BATTERIE DE SOUPAPES

(30) Priorität: 14.10.2003 DE 10347590
(43) Veröffentlichungstag der Anmeldung: 28.06.2006
(73) Patentinhaber: FESTO AG & Co. KG, 73734 Esslingen (DE)
(72) Erfinder: ELTROP, Nikolaus, 70771 Leinfelden-Echterdingen (DE)
(74) Vertreter: Vogler, Bernd
(86) Internationale Anmeldenummer: PCT/EP2004/010285
(87) Internationale Veröffentlichungsnummer: WO 2005/038266

(56) Entgegenhaltungen:
- EP-A- 0 463 394
- EP-A- 0 846 872
- EP-A- 0 855 520
- DE-A- 4 143 274
- US-A- 4 632 150
- US-A- 5 256 283
- US-A- 5 996 629
- US-B1- 6 435 205

## Beschreibung

Die Erfindung betrifft ein Verteilermodul mit den Merkmalen des Oberbegriffs des Anspruchs 1.

Ein Ventil dieser Art ist aus der Druckschrift EP0846872 bereits bekannt.

Ventilbatterien bzw. -anordnungen bestehen in der Regel aus mehreren, in Reihe hintereinander angeordneten Ventileinheiten, die ihrerseits ein Hauptventil besitzen, das auf einer von Speise- und Entlüftungskanälen durchsetzten Grundplatte aufgesetzt oder in die Grundplatte integriert ist. Derartige Ventilbatterien sind beispielsweise in der DE 41 43 274 A1 oder der EP 0 678 676 B1 beschrieben. Es gibt genormte Ventileinheiten, die einen Speisekanal zur Versorgung der Hauptventile mit Druckmedium und zwei mit dem Speisekanal verbundene Vorsteuer-Speisekanäle zur Versorgung der den Hauptventilen zugeordneten Vorsteuerventilen mit Vorsteuer-Druckmedium besitzen. Bei dem Druckmedium und Vorsteuer-Druckmedium handelt es sich vorzugsweise um Druckluft. Die beiden Vorsteuer-Speisekanäle sind beispielsweise über eine, vorzugsweise in Reihe mit den Ventileinheiten angeordnete, Verknüpfungsplatte mit dem Speisekanal verbunden und werden zwangsweise bei Beaufschlagung des Speisekanals ebenfalls mit Druckmedium beaufschlagt. Häufig ist es aber nicht notwendig beide Vorsteuer-Speisekanäle mit Druckmedium zu beaufschlagen, da beispielsweise zur Versorgung eines mit nur einem Vorsteuerventil versehenen Hauptventils ein einzelner Vorsteuer-Speisekanal ausreicht. Ist ein Hauptventil mit zwei Vorsteuerventilen vorgesehen, kann die Versorgung über eine im Hauptventil ausgebildete Kanalverzweigung erfolgen. Um die Druckmediumführung dementsprechend zu verändern muss bei herkömmlichen Ventilbatterien die Verknüpfungsplatte ausgetauscht und durch eine andere Verknüpfungsplatte ersetzt werden, die eine andersartige Druckmediumführung ermöglicht.

Aufgabe der Erfindung ist es, ein Verteilermodul für eine Ventilbatterie der eingangs erwähnten Art zu schaffen, das eine variable Druckmediumführung ermöglicht.

Diese Aufgabe wird durch ein Verteilermodul für Ventilbatterien mit den Merkmalen des unabhängigen Anspruchs 1 gelöst. Weiterbildungen der Erfindung sind in den Unteransprüchen dargestellt.

Es ist also nicht mehr erforderlich, Teile der Ventilbatterie bzw. -anordnung zu demontieren, um beispielsweise Platten auszutauschen, um damit eine geänderte Druckmediumführung einzustellen. Die gewünschten Veränderungen können auch infolge der einfachen Handhabbarkeit des Verteilermoduls vom Kunden selbst vorgenommen werden. Eine doppelte Lagerhaltung an Platten ist nicht mehr erforderlich. Es gibt keine Bauteile, welche nach Austausch getrennt von der Ventilbatterie, aufbewahrt werden müssen. Der Montagezustand ist leicht von außen erkennbar. Ferner sind herkömmliche Ventilbatterien mit dem erfindungsgemäßen Verteilermodul nachrüstbar.

Als Druckmedium oder Vorsteuer-Druckmedium im Sinne der Anmeldung wird vorzugsweise Druckluft verstanden. Es können aber auch andere gasförmige oder hydraulische Druckmedien eingesetzt werden. Bei der Schnittstelle handelt es sich vorzugsweise um einen Bereich des Verteilermoduls an dem die Kanalabschnitte zusammengeführt werden.

Vorzugsweise besteht die Ventilbatterie aus genormten Ventileinheiten, wobei ein einzelner Speisekanal und zwei Vorsteuer-Speisekanäle gebildet werden.

Bei einer Weiterbildung der Erfindung ist ein dritter Schaltzustand einstellbar, bei dem alle drei Kanalabschnitte voneinander getrennt sind. Es ist auch ein vierter Schaltzustand einstellbar, bei dem der Speisekanalabschnitt mit wenigstens einem der Vorsteuer-Speisekanalabschnitte verbunden ist und gleichzeitig von wenigstens einem anderen Vorsteuer-Speisekanalabschnitt getrennt ist.

Besonders bevorzugt sind also wenigstens vier Schaltzustände einstellbar, mit denen eine jeweils unterschiedliche Führung des Druckmediums bzw. Vorsteuer-Druckmediums, eingestellt werden kann.

Beim ersten Schaltzustand sind die Vorsteuer-Speisekanalabschnitte vom Speisekanalabschnitt abgekoppelt und untereinander verbunden, so dass eine externe Versorgung mit Vorsteuer-Druckmedium möglich ist, wobei das Vorsteuer-Druckmedium, insbesondere sogenannte Vorsteuerhilfsluft, einen anderen Druck als das Druckmedium bzw. Haupt-Druckmedium haben kann. Die Einspeisung des Vorsteuer-Druckmediums kann über einen einzelnen Vorsteuer-Druckmediumanschluss erfolgen, da die Vorsteuer-Speisekanalabschnitte über das Verteilermodul miteinander verknüpft sind und somit Vorsteuer-Druckmedium von einem Vorsteuer-Speisekanalabschnitt in wenigstens einen anderen gelangen kann.

Beim zweiten Schaltzustand sind alle Kanalabschnitte miteinander verknüpft, sodass mit der Einspeisung des Druckmediums über den Speisekanal und den damit gekoppelten Speisekanalabschnitt des Verteilermoduls, auch gleichzeitig die Versorgung mit Vorsteuer-Druckmedium ermöglicht ist.

Beim dritten Schaltzustand, bei dem alle Kanalabschnitte voneinander getrennt sind, kann das Vorsteuer-Druckmedium extern eingespeist werden, beispielsweise in ähnlicher oder identischer Weise zum ersten Schaltzustand. Auch hier ist es möglich Vorsteuer-Druckmedium mit anderem Druck als das Haupt-Druckmedium zu fahren. Falls nur ein Vorsteuer-Speisekanalabschnitt zur Versorgung mit Vorsteuer-Druckmedium benötigt wird, kann der nicht beaufschlagte Vorsteuer-Speisekanalabschnitt für Sondernutzungen verwendet werden, beispielsweise kann er als Entlüftungskanal bei der Entlüftung der Vorsteuerventile eingesetzt werden. Eine solche sogenannte "gefasste Abluft" ist beispielsweise in Reinräumen zwingend vorgeschrieben.

Beim vierten Schaltzustand, bei dem der Speisekanalabschnitt mit wenigstens einem der Vorsteuer-Speisekanalabschnitte gekoppelt ist und gleichzeitig von wenigstens einem anderen Vorsteuer-Speisekanalabschnitt getrennt ist, kann die Einspeisung mit Vorsteuer-Druckmedium intern erfolgen, das heißt, Druckmedium kann vom Speisekanalabschnitt an der Schnittstelle des Verteilermoduls in den Vorsteuer-Speisekanalabschnitt gelangen. Der abgekoppelte Vorsteuer-Speisekanalabschnitt und dadurch der dazugehörige Vorsteuer-Speisekanal der Ventilbatterie können dann ebenfalls für Sonderaufgaben bzw. -nutzungen verwendet werden.

Durch das erfindungsgemäße Verteilermodul lassen sich also mindestens vier ganz unterschiedliche Schaltzustände einstellen, sodass abhängig vom Einsatzort, den Einsatzbedingungen usw. der Ventilbatterie ein bestimmter Schaltzustand und somit eine gewünschte Druckmediumführung eingestellt werden kann.

Das Verteilermodul kann eine Montagefläche zur Montage an eine Ventilbatterie und eine entgegengesetzt dazu liegende Bedienfläche zum Bedienen des Steuerelementes aufweisen. Die Kanalabschnitte können zumindest im Bereich der Montagefläche im montierten Zustand des Verteilermoduls fluchtend zu den jeweiligen Kanälen in der Ventilbatterie ausgerichtet sein, wobei die Verbindung zur vorzugsweise zentral im Verteilermodul angeordneten Schnittstelle durch jeweils mehrere Kanalabschnitts-Umlenkbereiche ausgebildet sein kann. Druckmedium kann also zunächst im Bereich der Montagefläche in das Verteilermodul eintreten und wird dann insbesondere mehrmals umgelenkt, bis es schließlich zur Schnittstelle gelangt.

Alternativ ist es möglich, zwischen dem Verteilermodul und der Ventilbatterie ein Adapterstück vorzusehen, das seinerseits Kanalbereiche aufweist, die einenends mit den Kanälen der Ventilbatterie und andernends mit den Kanalabschnitten des Verteilermoduls verbunden sind. Die Umlenkung des Druckmediums und dessen Hinführung zur Schnittstelle erfolgt dort nicht im Verteilermodul selber, sondern im Adapterstück.

Die Schnittstelle sind in wenigstens drei Schnittstellen-Sektoren unterteilt, in die jeweils mindestens ein Kanalabschnitt einmündet. Vorzugsweise sind genau drei Schnittstellen-Sektoren vorgesehen in die jeweils ein Kanalabschnitt einmündet. Mit dem Steuerelement lassen sich Druckmedium führende Strömungsbrücken zwischen den Schnittstellen-Sektoren öffnen oder schließen, sodass Druckmedium vom einen Sektor in einen anderen übertreten kann oder der Übertritt gesperrt ist. Besonders bevorzugt ist das Steuerelement relativ zur Schnittstelle beweglich an dieser angeordnet und besitzt wenigstens drei, insbesondere komplementär zu den Schnittstellen-Sektoren ausgebildete, vorzugsweise aneinander angrenzende Steuer-Sektoren. Die Steuer-Sektoren können derart mit den Schnittstellen-Sektoren gekoppelt werden, dass je nach Stellung der Steuer-Sektoren zu den Schnittstellen-Sektoren Druckmedium über die jeweilige Strömungsbrücke in jeweils mindestens einen benachbarten Schnittstellen-Sektor übertreten kann.

Die einzelnen Schnittstellen-Sektoren können durch Schnittstellen-Querstege und die einzelnen Steuer-Sektoren durch Steuer-Querstege voneinander getrennt sein, wobei bei einer fluchtenden Ausrichtung eines Steuer-Quersteges zu einem Schnittstellen-Quersteg die zugehörige Strömungsbrücke zwischen zwei Schnittstellen-Sektoren geschlossen ist.

Die Verschaltung der einzelnen Kanalabschnitte des Verteilermoduls kann also durch direkten, insbesondere mechanischen, Eingriff des Steuerelementes in die Schnittstelle erfolgen.

Alternativ ist es möglich, die Schnittstelle aus wenigstens drei voneinander beabstandeten Kammern aufzubauen, die über wenigstens eine Fluidleitung miteinander verbunden sind, wobei sich in der jeweiligen Fluidleitung ein Absperrelement befindet, das über das Steuerelement, beispielsweise mittels Signalen geöffnet oder geschlossen werden kann.

Besonders bevorzugt ist das Steuerelement drehbar an der Schnittstelle gelagert, insbesondere ist es als kappenartiger Drehschalter ausgebildet. Die Lage der Steuer-Sektoren kann also in Bezug auf die drehfesten Schnittstellen-Sektoren durch Verdrehen des Steuerelementes gegenüber der Schnittstelle verändert werden.

Zwischen dem Verteilerelement und der Schnittstelle kann eine Dichtung, beispielsweise ein insbesondere aus Gummimaterial hergestellter Dichtring angeordnet sein, die an die Form der Steuer-Sektoren angepasst und drehfest mit dem Steuerelement verbunden ist. Ist also wenigstens ein Schnittstellen-Quersteg fluchtend zu einem Steuer-Quersteg ausgerichtet, wird durch die Dichtung eine fluiddichte Abdichtung der betreffenden zueinander benachbarten Schnittstellen-Sektoren erzielt.

Das Steuerelement kann Rastmittel zum Einrasten in eine, einen gewünschten Schaltzustand vorgebende, Schaltstellung aufweisen. Vorzugsweise sind am Steuerelement Rastnasen vorgesehen, die in Rastnuten an der Schnittstelle einrastbar sind. Alternativ ist es möglich, die Rastnasen an der Schnittstelle und die Rastnuten am Steuerelement auszubilden.

Das Verteilermodul kann von außen sichtbare Schaltsymbole aufweisen, von denen jeweils eines einem bestimmten Schaltzustand zugeordnet ist. Die Schaltsymbole können beispielsweise Zahlen, Leuchtelemente oder dergleichen sein. Vorzugsweise befinden sich die Schaltsymbole an der Bedienseite im Bereich der Schnittstelle des Verteilermoduls beispielsweise im Bereich des Umfangs des insbesondere kreisförmig ausgebildeten Steuerelementes. Das Steuerelement kann wenigstens ein Betätigungsmittel zu dessen insbesondere manuellen Verschaltung zwischen den verschiedenen Schaltstellungen aufweisen, das insbesondere in Zusammenwirkung mit einem der Schaltsymbole gleichzeitig als Anzeigeelement die aktuell ausgewählte Schaltstellung anzeigt.

Die Erfindung umfasst ferner eine Ventilbatterie mit den Merkmalen des abhängigen Anspruchs 16.

Bezüglich weiterer Details der Ventilbatterie wird auf die vorstehende Beschreibung und die nachfolgende Beschreibung eines bevorzugten Ausführungsbeispiels der Erfindung verwiesen.

Ein bevorzugtes Ausführungsbeispiel der Erfindung ist in den Zeichnungen dargestellt und wird im Folgenden näher erläutert. Die Zeichnungen zeigen:
- Fig. 1: eine perspektivische Darstellung einer Ventilbatte- rie ohne Verteilermodul,
- Fig. 2: das erfindungsgemäße Verteilermodul in gesonderter, perspektivischer Vorderansicht,
- Fig. 3: das Verteilermodul von Fig. 2 in perspektivischer Rückansicht,
- Fig. 4: die Schnittstelle des Verteilermoduls in schemati- scher Darstellung,
- Fig. 5: vier verschiedene Schaltzustände gemäß den Fig. 5I bis IV anhand einer schematischen Darstellung ver- schiedener Kanalführungen und
- Fig. 6: vier verschiedene Schaltzustände anhand der Fig. 6 I bis IV anhand verschiedener Stellungen des Steu- erelementes.

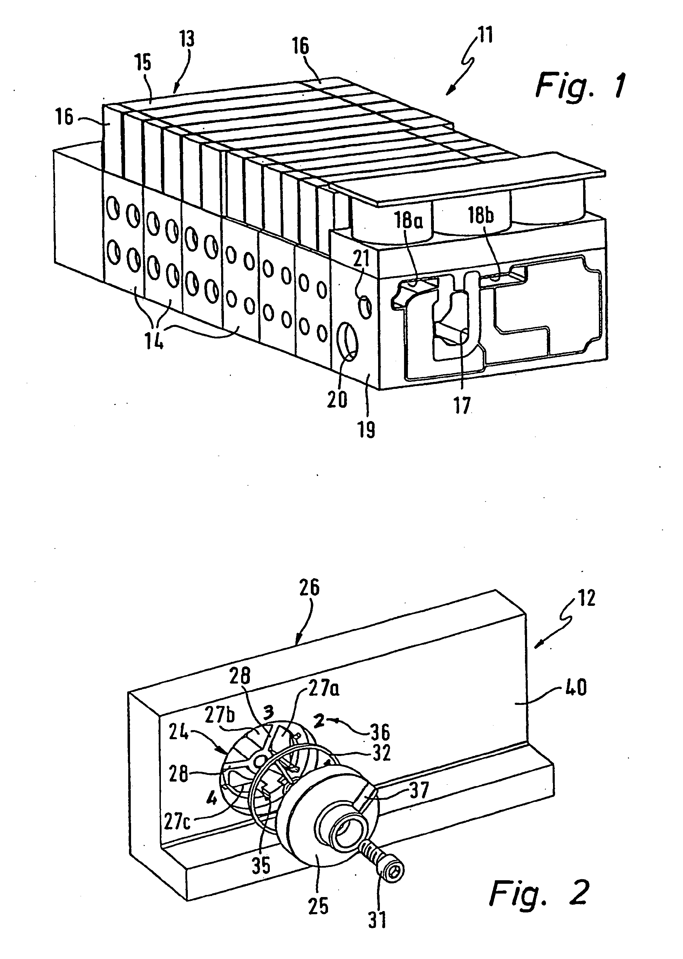

Fig. 1 zeigt ein bevorzugtes Ausführungsbeispiel einer Ventilbatterie 11 ohne ein Verteilermodul 12, das an einer oder an beiden Stirnseiten der Ventilbatterie 11 befestigt werden kann.

Die beispielhaft dargestellte Ventilbatterie 11 umfasst eine Mehrzahl einzelner hintereinander angeordneter, aneinander befestigter Ventileinheiten 13, die ihrerseits jeweils aus einer Grundplatte 14 und einem an der Grundplatten-Oberseite befestigten Hauptventil 15 bestehen. Dem Hauptventil 15 ist wenigstens ein, vorzugsweise an wenigstens einer schmalen Stirnseite des Hauptventils 15 angeordnetes Vorsteuerventil 16 zu dessen Ansteuerung zugeordnet. Gemäß dem bevorzugten Ausführungsbeispiel sind zwei, beidseits des Hauptventils 15 angeordnete Vorsteuerventile 16 vorgesehen.

Es ist auch eine alternative Ausführungsform der Ventilbatterie 11 einsetzbar, die aus einer Mehrzahl von Ventileinheiten 13 besteht, bei denen das Hauptventil 15 in die Grundplatte 14 integriert ist. Daraus ergibt sich eine relativ kompakte Bauweise der Ventilbatterie 11.

Jede Grundplatte 14 einer Ventileinheit 13 besitzt wenigstens drei Kanäle, so dass durch Aneinanderreihung der Grundplatten 14 wenigstens ein Speisekanal 17 und wenigstens zwei Vorsteuer-Speisekanäle 18a, 18b gebildet werden, die die Ventilbatterie 11 durchziehen und zur Versorgung der Hauptventile 15 und der Vorsteuerventile 16 mit Druckmedium bzw. Vorsteuer-Druckmedium dienen. Die beispielhaft dargestellte Ventilbatterie 11 besteht aus genormten Ventileinheiten 13, die ihrerseits einen Speisekanal 17 und zwei Vorsteuer-Speisekanäle 18a, 18b besitzen. Bei dem Druckmedium und Vorsteuer-Druckmedium handelt es sich vorzugsweise um Druckluft. Die Einspeisung von Druckmedium erfolgt über eine in Reihe mit den Ventileinheiten 13 angeordnete Einspeiseplatte 19, wobei sich ein Speisekanalanschluss 20 und ein Vorsteuer-Speisekanalanschluss 21 an der schmalen Stirnseite der Einspeiseplatte 19 befindet.

Es ist auch möglich, zwei Zwischen- bzw. Einspeiseplatten 19 vorzusehen,' sodass ein Teil der Ventilbatterie 11 über die eine und ein anderer Teil über die andere Zwischenplatte 19 mit Druckmedium versorgt werden kann. Dadurch ist es auch möglich, verschiedene Ventileinheiten 13, wie beispielhaft in Fig. 1 dargestellt, miteinander zu kombinieren, wobei die Kontaktfläche der beiden Ventileinheiten-Gruppen fluiddicht verschlossen werden kann, sodass kein Druckmedium von der einen Ventileinheiten-Gruppe zur benachbarten übertreten kann. Dadurch ist es möglich die Ventileinheiten-Gruppen mit voneinander verschiedenen Drücken zu fahren.

Die Ventilbatterie 11 wird durch ein Verteilermodul 12, das in Fig. 2 in gesonderter Darstellung gezeigt ist, endseitig abgeschlossen, wobei das Verteilermodul 12 in Batterie-Längsrichtung in Reihe an der Einspeiseplatte 19 befestigt ist. Bei einer nicht dargestellten Alternative kann auch an jedem Ende der Ventilbatterie 11 ein Verteilermodul 12 befestigt sein.

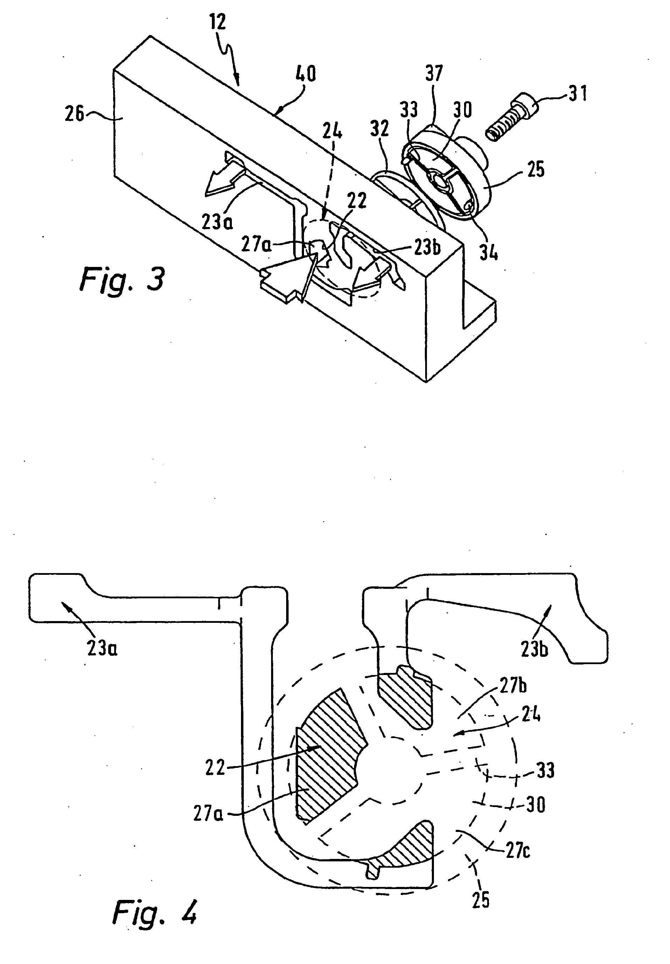

Im Folgenden wird die Erfindung beispielhaft anhand des bevorzugten Ausführungsbeispiels mit genormter Ventilbatterie 11 mit einem Speisekanal 17 und zwei Vorsteuer-Speisekanälen 18a, 18b und dementsprechend mit einem, insbesondere in den Figuren 2 und 3 dargestellten, Verteilermodul 12 mit einem Speisekanalabschnitt 22 und zwei Vorsteuer-Speisekanalabschnitten 23a, 23b beschrieben. Es versteht sich, dass auch mehr als ein und/oder mehr als zwei Speisekanal- bzw. Vorsteuer-Speisekanalabschnitte 22, 23a, 23b vorgesehen sein können. Der Speisekanalabschnitt 22 und die Vorsteuer-Speisekanalabschnitte 23a, 23b sind im montierten Zustand des Verteilermoduls 12 an der Ventilbatterie 11 mit dem Speisekanal 17 und den Vorsteuer-Speisekanälen 18a, 18b gekoppelt, so dass Druckmedium bzw. Vorsteuer-Druckmedium ins Verteilermodul 12 gelangen kann.

Am Verteilermodul 12 befindet sich eine Schnittstelle 24 zur Verbindung der drei Kanalabschnitte 22, 23a, 23b untereinander. Der Schnittstelle 24 ist ein Steuerelement 25 zugeordnet, das derart ausgebildet ist, dass verschiedene Schaltzustände einstellbar sind, in denen der Speisekanalabschnitt 22 und die beiden Vorsteuer-Speisekanalabschnitte 23a, 23b unterschiedlich miteinander verschaltet sind, wie nachfolgend näher erläutert wird.

Das Verteilermodul 12 besitzt ähnlich den Ventileinheiten 13 eine plattenförmige Gestalt mit zumindest im Wesentlichen rechteckförmigem Plattenumriss. Es ist eine Montagefläche 26 zur Montage an die Ventilbatterie, insbesondere an die Zwischenplatte 19, vorgesehen.

Im montierten Zustand des Verteilermoduls 12 an der Ventilbatterie 11 fluchten die Kanalabschnitte 22, 23a, 23b des Verteilermoduls 12 mit den jeweiligen Kanälen 17, 18a, 18b der Ventilbatterie 11 im Bereich der Montagefläche 26. Die Vorsteuer-Kanalabschnitte 23a, 23b besitzen jeweils mehrere Umlenkbereiche, so dass sie zur zentral gelegenen Schnittstelle 24 geführt werden.

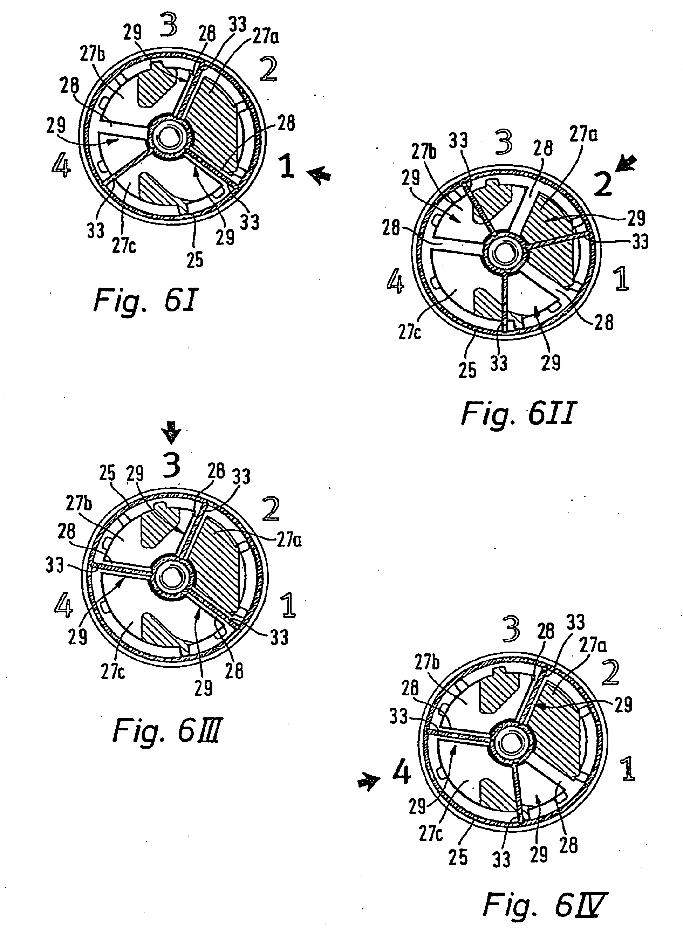

Wie in den Figuren 4 bzw. 6 I bis 6 IV beispielhaft dargestellt, ist die Schnittstelle 24 in drei Sektoren 27a, 27b, 27c unterteilt, in die jeweils ein Kanalabschnitt 22, 23a, 23b einmündet. Die Sektoren 27a, 27b, 27c haben einen Querschnitt, der größer ist als der Querschnitt der einmündenden Kanalabschnitte 22, 23a, 23b. Die Schnittstellen-Sektoren 27a, 27b, 27c haben einen kreissegmentartigen Querschnitt und bilden zusammen eine Kreisfläche, wobei die Schnittstellen-Sektoren nebeneinander angeordnet sind und durch Schnittstellen-Querstege 28 voneinander getrennt sind, die bei entsprechender Schaltstellung des nachfolgend näher beschriebenen Steuerelementes 25 eine Strömungsbrücke 29 für Druckmedium zwischen zwei benachbarten Schnittstellen-Sektoren 27a, 27b, 27c bilden. Es versteht sich, dass auch andere Querschnittsformen der Sektoren denkbar sind, beispielsweise rechteckige, quadratische o. dgl.. Das Steuerelement 25 ist beispielhaft anhand eines drehbar an der Schnittstelle 24 gelagerten Drehschalters dargestellt. Der Drehschalter besitzt drei Steuer-Sektoren 30, die komplementär zu den drei Schnittstellen-Sektoren 27a, 27b, 27c ausgebildet sind, also vorzugsweise die gleiche Form und Größe aufweisen. Der Drehschalter ist mittels eines Befestigungsmittels 31, insbesondere einer Schraube, zentrisch an der Schnittstelle 24 befestigt. Zwischen dem Drehschalter und der Schnittstelle 24 befindet sich eine Dichtung 32 in Form eines Dichtringes, der an die Form der Steuer-Sektoren 30 angepasst ist, also sowohl den Kreisumfang als auch die Steuer-Querstege 33 bedeckt. Bei fluchtender Ausrichtung zwischen einem Schnittstellen-Quersteg 28 und einem Steuer-Quersteg 33 wird somit eine fluiddichte Abdichtung erreicht.

Der Drehschalter besitzt ferner Rastmittel in Form von Rastnasen 34, die insbesondere diametral gegenüberliegend von der Rückseite des Drehschalters abstehen. Die Rastnasen 34 können beim Verdrehen des Drehschalters in an der Schnittstelle 24 ausgebildete Rastnuten 35 einrasten, wobei die Rastnuten 35 über den Umfang der Schnittstelle 24 derart verteilt sind, dass in vier verschiedenen Stellungen des Drehschalters eingerastet werden kann, womit vier verschiedene Schaltstellungen und somit Schaltzustände vorgegeben werden können.

Das Verteilermodul 12 umfasst ferner Schaltsymbole 36 in Form von Zahlen, die über den Umfang der Schnittstelle 24 verteilt angeordnet sind und jeweils einen Schaltzustand repräsentieren. An der Oberseite des Drehschalters befindet sich ein Betätigungsmittel 37 in Form eines relativ schmalen Vorsprungs, der ein manuelles Verdrehen des Drehschalters ermöglicht und gleichzeitig die aktuelle Schaltstellung des Drehschalters anzeigt, womit der Benutzer den aktuellen Schaltzustand des Verteilermoduls 12 ablesen kann.

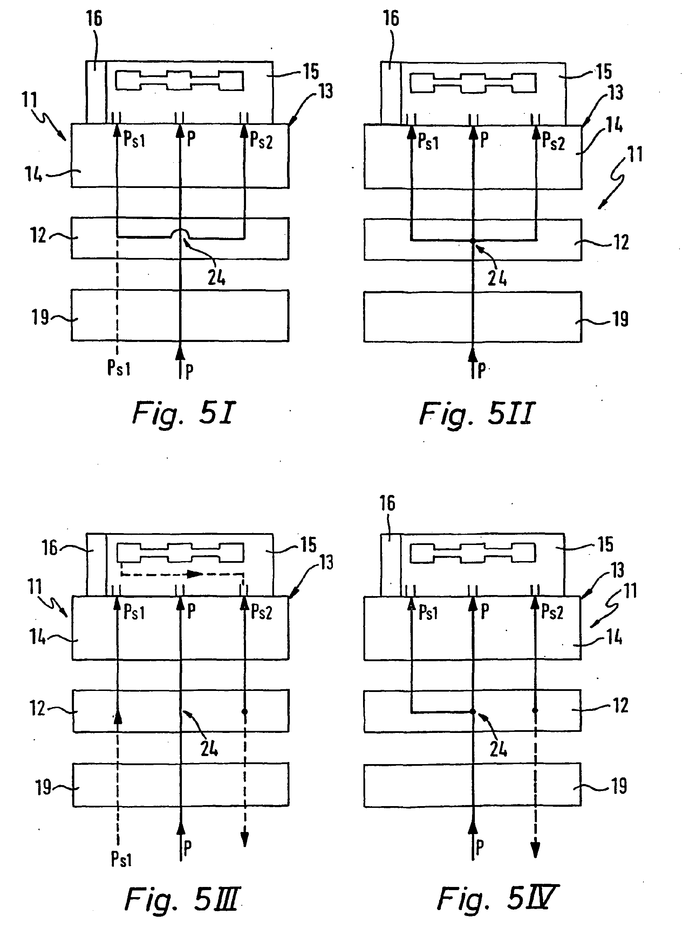

Mit dem Verteilermodul 12 gemäß dem bevorzugten Ausführungsbeispiel lassen sich vier verschiedene Schaltzustände einstellen, die beispielhaft in den Fig. 5 I bis IV und 6 I bis IV dargestellt sind. Es versteht sich, dass bei dementsprechend anderen Ausführungsformen des Verteilermoduls auch weniger oder mehr als vier Schaltzustände eingestellt werden können. Beim ersten Schaltzustand, der durch Drehen des Drehschalters auf das Schaltsymbol "1" anwählbar ist, wird gemäß den Fig. 5 I und 6 I Druckmedium (P)über den Speisekanalanschluss 20 an der Zwischenplatte 19 in den Speisekanal 17 der Ventilbatterie 11 eingespeist und gelangt von dort in den Speisekanalabschnitt 22 des Verteilermoduls 12. Wie in Fig. 6 I dargestellt, ist dieser Schnittstellen-Sektor 27a jedoch von den anderen beiden Schnittstellen-Sektoren 27b, 27c abgekoppelt, da die diesen Schnittstellen-Sektor 27a begrenzenden Schnittstellen-Querstege 28 fluchtend zu den Steuer-Querstegen 33 des Drehschalters ausgerichtet sind, womit ein Übertritt von Druckmedium in die benachbarten Schnittstellen-Sektoren 27b, 27c verhindert ist. Das Druckmedium wird also ausschließlich zur Speisung der Hauptventile 15 der Ventileinheiten 13 verwendet.

Die Zufuhr von Vorsteuer-Druckmedium (P_{S1}, P_{S2}) insbesondere der Vorsteuerhilfslust erfolgt gemäß dem ersten Schaltzustand über den Vdrsteuer-Speisekanalanschluss 21 an der Einspeiseplatte 19, sodass Vorsteuer-Druckmedium in einen der beiden Vorsteuer-Speisekanäle 18a, 18b der Ventilbatterie 11 und von dort in den Vorsteuer-Speisekanalabschnitt 23b des Verteilermoduls 12 gelangt. Von dort strömt das Vorsteuer-Druckmedium in den zugehörigen Schnittstellen-Sektor 27c an der Schnittstelle 24. Die Stellung des Drehschalters bezüglich der Schnittstelle 24 ist nun derart, dass ein Übertritt von Vorsteuer-Druckmedium in den mit Haupt-Druckmedium beaufschlagten Schnittstellen-Sektor 27a verhindert ist, dass aber durch die nicht-fluchtende Ausrichtung des Schnittstellen-Querstegs 28 zum Steuer-Quersteg 33 im Bereich zwischen den anderen beiden Schnittstellen-Sektoren 27b, 27c Druckmedium über eine dort gebildete Strömungsbrücke 29 von einem in den anderen Schnittstellen-Sektor 27b, 27c gelangen kann.

Die beiden Vorsteuer-Speisekanäle 18a, 18b sind also über die Schnittstelle 24 miteinander gekoppelt, sodass bei Hauptventilen mit zwei Vorsteuerventilen 16, wie beispielsweise solchen aus Fig. 1, beide Vorsteuerventile 16 versorgt werden können. Da das Vorsteuer-Druckmedium vollständig vom Haupt-Druckmedium abgekoppelt ist, kann auch ein davon verschiedener Druck eingestellt werden.

Beim zweiten Schaltzustand, der durch Anwahl des Schaltsymbols "2" eingestellt werden kann, sind, wie in den Fig. 5 II und 6 II dargestellt, alle Kanäle bzw. Kanalabschnitte 22, 23a, 23b miteinander verbunden. Es gelangt also Druckmedium (P) bzw. Haupt-Druckmedium über den Speisekanalanschluss 20 in den Speisekanal 17 und von dort in den Speisekanalabschnitt 22 des Verteilermoduls 12, wo es in den entsprechenden Schnittstellen-Sektor 27a einströmt. Die Stellung des Drehschalters ist, wie in Fig. 6 II gezeigt, nun derart, dass sämtliche Schnittstellen-Querstege 28 nicht-fluchtend zu den Steuer-Querstegen 33 ausgerichtet sind, womit zwischen den einzelnen Schnittstellen-Sektoren 27a, 27b, 27c Strömungsbrücken 29 gebildet werden, sodass ein Übertritt von Druckmedium in jeweils benachbarte Schnittstellen-Sektoren 27b, 27c ermöglicht ist. Das Haupt-Druckmedium (P) wird also in diesem Fall auch als Vorsteuer-Druckmedium (P_{S1}, P_{S2}) verwendet. Es besteht eine interne Vorsteuer-Druckmedium-Versorgung. Der Vorsteuer-Speisekanalanschluss 21 wird in diesem Fall durch beispielsweise eine Verschlussschraube verschlossen.

Beim dritten Schaltzustand, der durch Anwahl des Schaltsymbols "3" auswählbar ist, sind, wie in den Fig. 5 III und 6 III dargestellt, alle Kanäle bzw. Kanalabschnitte 22, 23a, 23b voneinander abgekoppelt. Dies wird dadurch erreicht, dass durch entsprechende Stellung des Drehschalters gegenüber der Schnittstelle 24 alle Schnittstellen-Querstege 28 fluchtend zu den Steuer-Querstegen ausgerichtet und die Schnittstellen-Sektoren 27a, 27b, 27c fluiddicht voneinander getrennt sind. Es gelangt also kein Haupt-Druckmedium (P)über die Schnittstelle 24 in die Vorsteuer-Speisekanäle 18a, 18b, sodass wiederum für eine externe Vorsteuer-Druckmedium-Zuführung gesorgt werden muss. Da hierzu nur ein Vorsteuer-Speisekanal 18a notwendig ist - bei Hauptventilen 15 mit zwei Vorsteuerventilen 16 kann eine ventilinterne Aufteilung vorhanden sein - kann der andere Vorsteuer-Speisekanal 18b für Sondernutzungen verwendet werden. Eine solche Sondernutzung ist beispielsweise, die Entlüftung der Vorsteuerventile 16 über diesen Kanal als sogenannte "gefasste Abluft" zu fahren.

Beim vierten Schaltzustand, der durch Anwahl des Schaltsymbols "4" auswählbar ist, ist, wie in den Fig. 5 IV und 6 IV dargestellt, der Speisekanal 17 mit einem der beiden Vorsteuer-Speisekanäle 18a verbunden. Wie in Fig. 6 IV dargestellt, ist hier durch die Stellung des Drehschalters ein einem Vorsteuer-Speisekanalabschnitt 23a zugeordneter Schnittstellen-Sektor 27b von den anderen beiden Schnittstellen-Sektoren 27a, 27c fluiddicht getrennt, während zwischen den anderen beiden Schnittstellen-Sektoren eine Strömungsbrücke 29 besteht. Das Haupt-Druckmedium (P)wird wiederum als Vorsteuer-Druckmedium (P_{S1}) verwendet. Der abgekoppelte Kanal 27b kann wiederum für Sonderaufgaben genutzt werden, beispielsweise für "gefasste Abluft".

## Patentansprüche

1. Verteilermodul für Ventilbatterien (11), die mindestens eine Ventileinheit (13) mit einem über mindestens einen Speisekanal (17) mit Druckmedium gespeisten Hauptventil (15) und mindestens einem zu dessen Ansteuerung dienenden, über wenigstens einen Vorsteuer-Speieekanal (18a, 18b) mit Vorsteuer-Druckmedium gespeisten Vorsteuerventil (16) besitzen, wobei das Verteilermodul wenigstens einen Speisekanalabschnitt (22), der mit dem wenigstens einen Speisekanal (17) der Ventilbatterie (11), und wenigstens zwei Vorsteuer-Speisekanalabschnitte (23a, 23b), die mit wenigstens zwei Vorsteuer-Speinekanälen (18a, 18b) der Ventilbatterie (11) koppelbar sind, aufweist, eine Schnittstelle (24) zur Verbindung der Kanalabschnitte (22, 23a, 23b) untereinander aufweist, der ein Steuerelement (25) zugeordnet ist, das derart ausgebildet ist, dass verschiedene Schaltzustände einstellbar sind, in denen der Speisekanalabschnitt (22) und die Vorsteuer-Speisekanalabschnitte (23a, 23b) unterschiedlich miteinander verschaltet sind, von denen wenigstens bei einem ersten Schaltzustand die Vorsteuer-Speisekanalabschnitte (23a, 23b) miteinander verbunden und gleichzeitig vom Speisekanalabschnitt (22) getrennt sind und wenigstens bei einem zweiten Schaltzustand alle Kanalabschnitte (22, 23a, 23b) miteinander verbunden sind, **dadurch gekennzeichnet, dass** die Schnittstelle (24) in wenigstens drei Schnittstellen-Sektoren (27a, 27b, 27c) unterteilt ist, in die jeweils mindestens ein Kanalabschnitt (22, 23a, 23b) einmündet, wobei mittels des Steuerelementes (25) Druckmedium leitende Strömungsbrücken (29) zwischen den Schnittstellen-Sektoren (27a, 27b, 27c) öffenoder schließbar sind.

2. Verteilermodul nach Anspruch 1, **dadurch gekennzeichnet, dass** ein Speisekanalabschnitt (22), der mit dem Speisekanal (17) der Ventilbatterie (11) und zwei Vorsteuer-Speisekanäle (23a, 23b), die mit jeweils einem Vorsteuer-Speisekanal (18a, 18b) der Ventilbatterie (11) koppelbar sind, vorgesehen sind.

3. Verteilermodul nach Anspruch 1 oder 2, **dadurch gekennzeichnet, dass** ein dritter Schaltzustand einstellbar ist, bei dem alle Kanalabschnitte (22, 23a, 23b) voneinander getrennt sind.

4. Verteilermodul nach einem der vorhergehenden Ansprüche, **dadurch gekennzeichnet, dass** ein vierter Schaltzustand einstellbar ist, bei dem der Speisekanalabschnitt (22) mit wenigstens einem der Vorsteuer-Speisekanalabschnitte (23a, 23b) verbunden ist und gleichzeitig von wenigstens einem anderen Vorsteuer-Speinekaaalabschnitt (23a, 23b) getrennt ist.

5. Verteilermodul nach einem der vorhergehenden Ansprüche, **dadurch gekennzeichnet, dass** es eine Montagefläche (26) zur Montage an eine Ventilbatterie (11) und eine entgegengesetzt dazu liegende Bedienfläche (40) zum Bedienen des Steuerelementes (25) aufweist, wobei vorzugsweise die Kanalabschnitte (22, 23a, 23b) zumindest im Bereich der Montagefläche (26) im montierten Zustand des Verteilermoduls (12) fluchtend zu den jeweiligen Kanälen (17, 18a, 18b) in der Ventilbatterie (11) ausgerichtet sind und die Verbindung zur Schnittstelle (24) durch jeweils mehrere Kanalabschnitts-Umlenkbereiche ausgebildet ist.

6. Verteilermodul nach einem der vorhergehenden Ansprüche, **dadurch gekennzeichnet, dass** die Schnittstellen-Sektoren (27a, 27b, 27c) aneinander angrenzen, und dass in die Schnittstellen-Sektoren (27a, 27b, 27c) jeweils ein einziger Kanalabschnitt (22, 23a, 23b) einmündet.

7. Verteilermodul nach Anspruch 6, **dadurch gekennzeichnet, dass** das Steuerelement (25) relativ zur Schnittstelle (24) beweglich an dieser angeordnet ist und wenigstens drei, insbesondere aneinander angrenzende Steuer-Sektoren (30) aufweist, wobei die Steuer-Sektoren (30) derart mit den Schnittstellen-Sektoren (27a, 27b, 27c) koppelbar sind, dass je nach Stellung der Steuer-Sektoren (30) zu den Schnittstellen-Sektoren (27a, 27b, 27c) Druckmedium über die jeweilige Strömungsbrücke (29) in jeweils benachbarte Schnittstellen-Sektoren (27a, 27b, 27c) übertreten kann.

8. Verteilermodul nach Anspruch 7, **dadurch gekennzeichnet, dass** die einzelnen Schnittstellen-Sektoren (27a, 27b, 27c) durch Schnittstellen-Querstege (28) und die einzelnen Steuer-Sektoren (30) durch Steuer-Querstege (33) voneinander getrennt sind, wobei bei einer fluchtenden Ausrichtung eines Steuer-Quersteges (33) zu einem Schnittstellen-Quersteg (28) die zugehörige Strömungsbrücke (29) geschlossen ist.

9. Verteilermodul nach Anspruch 7 oder 8, **dadurch gekennzeichnet, dass** das Steuerelement (25) drehbar an der Schnittstelle (24) gelagert ist, insbesondere als kappenartiger Drehschalter ausgebildet ist, wobei die Lage der Steuer-Sektoren (30) in Bezug auf die drehfesten Schnittstellen-Sektoren (27a, 27b, 27c) durch Verdrehen des Steuerelementes (25) gegenüber der Schnittstelle (24) veränderbar ist.

10. Verteilermodul nach einem der Ansprüche 7 bis 9, **dadurch gekennzeichnet, dass** die Schnittstellen-Sektoren (27a, 27b, 27c) und vorzugsweise die Steuer-Sektoren (30) einen kreissegmentartigen Querschnitt haben und insbesondere im Gesamten aneinander angrenzend angeordnet eine Kreisfläche bilden.

11. Verteilermodul nach einem der vorhergehenden Ansprüche, **dadurch gekennzeichnet, dass** zwischen dem Steuerelement (25) und der Schnittstelle (24) eine Dichtung zur fluiddichten Abdichtung jeweils benachbarter Schnittstellen-Sektoren (27a, 27b, 27c) bei jeweils geschlossener Strömungsbrücke (29) angeordnet ist, die vorzugsweise an die Form der Steuer-Sektoren (30) angepasst und drehfest mit dem Steuerelement (25) verbunden ist.

12. Verteilermodul nach einem der vorhergehenden Ansprüche, **dadurch gekennzeichnet, dass** das Steuerelement (25) Rastmittel zum Einrasten in eine, einen gewünschten Schaltzustand vorgebende Schaltstellung aufweist, wobei vorzugsweise am Steuerelement (25) Rastnasen (34) vorgesehen sind, die in Rastnuten (35) an der Schnittstelle (24) einrastbar sind.

13. Verteilermodul nach einem der vorhergehenden Ansprüche, **dadurch gekennzeichnet, dass** es von außen sichtbare Schaltsymbole (36), insbesondere Zahlen, aufweist, von denen jeweils ein Schaltsymbol (36) einem bestimmten Schaltzustand zugeordnet ist, wobei vorzugsweise die Schaltsymbole (36) an der Bedienseite (40) des Verteilermoduls (12) im Bereich der Schnittstelle (24) angeordnet sind, insbesondere im Bereich des Umfangs des vorzugsweise kreisförmig ausgebildeten Steuerelementes (25).

14. Verteilermodul nach Anspruch 13, **dadurch gekennzeichnet, dass** das Steuerelement (25) wenigstens ein Betätigungsmittel (37) zu dessen insbesondere manuellen Umschaltung zwischen den verschiedenen Schaltstellungen aufweist, das insbesondere in Zusammenwirkung mit einem der Schaltsymbole (36) gleichzeitig als Anzeigeelement die aktuell ausgewählte Schaltstellung anzeigt.

15. Verteilermodul nach einem der vorhergehenden Ansprüche, **dadurch gekennzeichnet, dass** es als ventileinheit (13) mit einem über wenigstens einen Speisekanal (17) mit Druckmedium gespeisten Hauptventil (15) und mindestens einem zu dessen Ansteuerung dienenden, über wenigstens einen Vorsteuer-Speisekanal (18a, 18b) mit Vorsteuer-Druckmedium gespeisten Vorsteuerventil (16) ausgestaltet ist.

16. Ventilbatterie, mit mindestens einer Ventileinheit, die ein über wenigstens einen Speisekanal (17) mit Druckmedium gespeistes Hauptventil (15) und mindestens ein zu dessen Ansteuerung dienendes, über wenigstens einen Vorsteuer-Speisekanal (18a, 18b) mit Vorsteuer-Druckmedium gespeistes Vorsteuerventil (16) aufweist, **gekennzeichnet durch** wenigstens ein Verteilermodul (12) nach einem der vorhergehenden Ansprüche.

## Claims

1. Distributor module for valve banks (11) having at least one valve unit (13) with at least one main valve (15) fed with pressure medium via at least one feed passage (17), and at least one pilot valve (16) for activating the former and fed with pilot pressure medium via at least one pilot feed passage (18a, 18b), wherein the distributor module has at least one feed passage section (22) which may be coupled to the one or more feed passages (17) of the valve bank (11), and at least two pilot feed passage sections (23a, 23b) which may be coupled to the two or more pilot feed passages (18a, 18b) of the valve bank (11), and has an interface (24) for interconnection of the passage sections (22, 23a, 23b) and to which is assigned a control element (25) designed so as to permit the setting of different switching states, in which the feed passage section (22) and the pilot feed passage sections (23a, 23b) are connected to one another in different ways, of which at least in a first switching state the pilot feed passage sections (23a, 23b) are connected to one another and simultaneously separated from the feed passage section (22), and in a second switching state all passage sections (22, 23a, 23b) are connected to one another, **characterised in that** the interface (24) is divided into at least three interface sectors (27a, 27b, 27c) into which in each case at least one passage sections (22, 23a, 23b) leads, wherein by means of the control element (25), flow bridges (29) conducting pressure medium between the interface sectors (27a, 27b, 27c) may be opened or closed.

2. Distributor module according to claim 1, **characterised in that** there is provided a feed passage section (22) which may be coupled to the feed passage (17) of the valve bank (11), and two pilot feed passage sections (23a, 23b) which may be coupled respectively to a pilot feed passage (18a, 18b) of the valve bank (11).

3. Distributor module according to claim 1 or 2, **characterised in that** a third switching state may be set, in which all passage sections (22, 23a, 23b) are separated from one another.

4. Distributor module according to any of the preceding claims, **characterised in that** a fourth switching state may be set, in which the feed passage section (22) is connected to at least one of the pilot feed passage sections (23a, 23b) and simultaneously separated from at least one other pilot feed passage section (23a, 23b).

5. Distributor module according to any of the preceding claims, **characterised in that** it has a mounting face (26) for mounting on a valve bank (11) and, opposite to the former, an operating face (40) for operating the control element (25), wherein preferably the passage sections (22, 23a, 23b) - at least in the assembled state of the distributor module (12) - are aligned flush with the respective passages (17, 18a, 18b) in the valve bank (11), and the connection to the interface (24) is formed in each case by several passage section bypass zones.

6. Distributor module according to any of the preceding claims, **characterised in that** the interface sectors (27a, 27b, 27c) are adjacent to one another, and that in each case a single passage section (22, 23a, 23b) leads into the interface sectors (27a, 27b, 27c).

7. Distributor module according to claim 6, **characterised in that** the control element (25) is mounted at the interface (24) so as to be movable relative to it, and has at least three control sectors (30), in particular adjacent to one another, wherein the control sectors (30) may be so coupled to the interface sectors (27a, 27b, 27c) that, depending on the position of the control sectors (30) relative to the interface sectors (27a, 27b, 27c), pressure medium may pass over the respective flow bridge (29) into the respectively adjacent interface sectors (27a, 27b, 27c).

8. Distributor module according to claim 7, **characterised in that** the individual interface sectors (27a, 27b, 27c) are separated from one another by interface transverse webs (28), and the individual control sectors (30) by control transverse webs (33), wherein when a control transverse web (33) is aligned with an interface transverse web (28), the associated flow bridge (29) is closed.

9. Distributor module according to claim 7 or 8, **characterised in that** the control element (25) is mounted rotatably at the interface (24), in particular in the form of a cap-like rotary switch, while the position of the control sectors (30) relative to the non-rotatable interface sectors (27a, 27b, 27c) may be varied relative to the interface (24) by turning the control element (25).

10. Distributor module according to any of claims 7 to 9, **characterised in that** the interface sectors (27a, 27b, 27c) and preferably the control sectors (30) have circular-segment-like cross-sections and in particular form a circular surface when mounted together adjacent to one another.

11. Distributor module according to any of the preceding claims, **characterised in that** between the control element (25) and the interface (24) there is provided, for fluid-tight sealing between respectively adjacent interface sectors (27a, 27b, 27c) when the respective flow bridge (29) is closed, a seal which is preferably matched to the shape of the control sectors (30) and is connected rotatably to the control element (25).

12. Distributor module according to any of the preceding claims, **characterised in that** the control element (25) has snap-in means for engaging in a switching position which prescribes a desired switching state, wherein preferably snap-in lugs (34) provided on the control element (25) are able to engage in snap-in slots (35) on the interface (24).

13. Distributor module according to any of the preceding claims, **characterised in that** it has switch symbols visible from the outside, in particular numbers, with one switch symbol (36) assigned in each case to a particular switching state, wherein preferably the switch symbols (36) are located on the operating side (40) of the distributor module (12) in the area of the interface (24), in particular in the area of the circumference of the preferably circular control element (25).

14. Distributor module according to claim 13, **characterised in that** the control element (25) has at least one actuating means (37) for switching, in particular manually, between the different switch positions, and which in particular in conjunction with one of the switch symbols (36), simultaneously as a display element shows the currently selected switch position.

15. Distributor module according to any of the preceding claims, **characterised in that** it is in the form of a valve unit (13) with a main valve (15) supplied with pressure medium via one or more feed passages (17), and at least one pilot valve (16) serving for actuation of the main valve and supplied with pilot pressure medium via one or more pilot feed passages (18a, 18b).

16. Valve bank with at least one valve unit which has main valve (15) supplied with pressure medium via one or more feed passages (17), and at least one pilot valve (16) serving for actuation of the main valve and supplied with pilot pressure medium via one or more pilot feed passages (18a, 18b), **characterised by** one or more distributor modules (12) according to any of the preceding claims.

## Revendications

1. Module de distribution pour des batteries de soupapes (11) qui possèdent au moins un ensemble de soupapes (13) avec une soupape principale (15) alimentée en fluide sous pression par au moins un canal d'alimentation (17) et au moins une soupape pilote (16) alimentée en fluide sous pression de commande pilote par au moins un canal d'alimentation de commande pilote (18a, 18b), servant à sa commande, le module de distribution présentant au moins une section de canal d'alimentation (22) qui peut être couplée avec l'au moins un canal d'alimentation (17) de la batterie de soupapes (11), et au moins deux sections de canal d'alimentation de commande pilote (23a, 23b) qui peuvent être couplées avec au moins deux canaux d'alimentation de commande pilote (18a, 18b) de la batterie de soupapes (11), une interface (24) pour la liaison des sections de canal (22, 23a, 23b) entre elles, à laquelle est associé un élément de commande (25) qui est réalisé de telle sorte que différents états de commutation puissent être réglés, dans lesquels la section de canal d'alimentation (22) et les sections de canal d'alimentation de commande pilote (23a, 23b) sont connectées différemment entre elles, parmi lesquelles au moins dans un premier état de commutation, les sections de canal d'alimentation de commande pilote (23a, 23b) sont reliées entre elles et sont séparées simultanément de la section de canal d'alimentation (22) et au moins dans un second état de commutation, toutes les sections de canal (22, 23a, 23b) sont reliées entre elles, **caractérisé en ce que** l'interface (24) est subdivisée en au moins trois secteurs d'interface (27a, 27b, 27c), dans lesquels respectivement au moins une section de canal (22, 23a, 23b) débouche, des ponts d'écoulement (29) conduisant du fluide sous pression entre les secteurs d'interface (27a, 27b, 27c) pouvant être ouverts ou fermés au moyen de l'élément de commande (25).

2. Module de distribution selon la revendication 1, **caractérisé en ce qu'**une section de canal d'alimentation (22), qui peut être couplée au canal d'alimentation (17) de la batterie de soupapes (11) et deux canaux d'alimentation de commande pilote (23a, 23b) qui peuvent être couplés respectivement à un canal d'alimentation de commande pilote (18a, 18b) de la batterie de soupapes (11), sont prévus.

3. Module de distribution selon la revendication 1 ou 2, **caractérisé en ce qu'**un troisième état de commutation peut être réglé, pour lequel toutes les sections de canal (22, 23a, 23b) sont séparées les unes des autres.

4. Module de distribution selon l'une des revendications précédentes, **caractérisée en ce qu'**un quatrième état de commutation peut être réglé, pour lequel la section de canal d'alimentation (22) est reliée à au moins l'une des sections de canal d'alimentation de commande pilote (23a, 23b) et est séparée simultanément d'au moins une autre section de canal d'alimentation de commande pilote (23a, 23b).

5. Module de distribution selon l'une des revendications précédentes, **caractérisé en ce qu'**il présente une surface de montage (26) pour le montage sur une batterie de soupapes (11) et une surface de commande (40) se trouvant à l'opposé pour commander l'élément de commande (25), les sections de canal (22, 23a, 23b) étant alignées de préférence au moins dans la zone de la surface de montage (26) à l'état monté du module de distribution (12) en alignement par rapport aux canaux (17, 18a, 18b) respectifs dans la batterie de soupapes (11) et la liaison avec l'interface (24) étant réalisée par respectivement plusieurs zones de renvoi de section de canal.

6. Module de distribution selon l'une des revendications précédentes, **caractérisé en ce que** les secteurs d'interface (27a, 27b, 27c) sont contigus, et **en ce que** respectivement une seule section de canal (22, 23a, 23b) débouche dans les secteurs d'interface (27a, 27b, 27c).

7. Module de distribution selon la revendication 6, **caractérisé en ce que** l'élément de commande (25) est disposé de manière mobile par rapport à l'interface (24) sur celle-ci et présente au moins trois secteurs de commande (30) en particulier contigus, les secteurs de commande (30) pouvant être couplés aux secteurs d'interface (27a, 27b, 27c) de telle sorte que selon la position des secteurs de commande (30) par rapport aux secteurs d'interface (27a, 27b, 27c), du fluide sous pression puisse passer par le pont d'écoulement (29) respectif dans des secteurs d'interface (27a, 27b, 27c) respectivement contigus.

8. Module de distribution selon la revendication 7, **caractérisé en ce que** les secteurs d'interface (27a, 27b, 27c) individuels sont séparés par des nervures d'interface (28) et les secteurs de commande (30) individuels par des nervures de commande (33), le pont d'écoulement (29) afférent étant fermé lors d'un alignement en affleurement d'une nervure de commande (33) par rapport à une nervure d'interface (28).

9. Module de distribution selon la revendication 7 ou 8, **caractérisé en ce que** l'élément de commande (25) est monté tournant sur l'interface (24), est réalisé en particulier comme un commutateur rotatif de type calotte, la position des secteurs de commande (30) par rapport aux secteurs d'interface (27a, 27b, 27c) immobiles en rotation pouvant être modifiée par rotation de l'élément de commande (25) par rapport à l'interface (24).

10. Module de distribution selon l'une des revendications 7 à 9, **caractérisé en ce que** les secteurs d'interface (27a, 27b, 27c) et de préférence les secteurs de commande (30) présentent une section transversale de type segment de cercle et forment disposés en particulier dans l'ensemble de manière contiguë les uns aux autres une surface circulaire.

11. Module de distribution selon l'une des revendications précédentes, **caractérisé en ce qu'**entre l'élément de commande (25) et l'interface (24) est disposée une garniture servant à rendre étanche au fluide des secteurs d'interface (27a, 27b, 27c) respectivement contigus lorsque le pont d'écoulement (29) est respectivement fermé, laquelle est adaptée de préférence à la forme des secteurs de commande (30) et est reliée de manière immobile en rotation à l'élément de commande (25).

12. Module de distribution selon l'une des revendications précédentes, **caractérisé en ce que** l'élément de commande (25) présente des moyens d'encliquetage pour l'encliquetage dans une position de commutation prescrivant un état de commutation souhaité, des ergots d'encliquetage (34) qui peuvent être encliquetés dans des rainures d'encliquetage (35) sur l'interface (24), étant de préférence prévus sur l'élément de commande (25).

13. Module de distribution selon l'une des revendications précédentes, **caractérisé en ce qu'**il présente des symboles de commutation (36) visibles depuis l'extérieur, en particulier des nombres, parmi lesquels un symbole de commutation (36) est associé respectivement à un état de commutation déterminé, les symboles de commutation (36) étant disposés de préférence sur le côté de commande (40) du module de distribution (12) dans la zone de l'interface (24), en particulier dans la zone de la périphérie de l'élément de commande (25) réalisé de préférence en forme de cercle.

14. Module de distribution selon la revendication 13, **caractérisé en ce que** l'élément de commande (25) présente au moins un moyen d'actionnement (37) pour sa commutation en particulier manuelle entre les différentes positions de commutation, qui en même temps indique en particulier en coopération avec l'un des symboles de commutation (36) comme élément indicateur la position de commutation sélectionnée actuellement.

15. Module de distribution selon l'une des revendications précédentes, **caractérisé en ce qu'**il est configuré comme un ensemble de soupapes (13) avec une soupape principale (15) alimentée en fluide sous pression par au moins un canal d'alimentation (17) et au moins une soupape pilote (16) alimentée en fluide sous pression de commande pilote par au moins un canal d'alimentation de commande pilote (18a, 18b), servant à sa commande.

16. Batterie de soupapes avec au moins un ensemble de soupapes qui présente une soupape principale (15) alimentée en fluide sous pression par au moins un canal d'alimentation (17) et au moins une soupape pilote (16) alimentée en fluide sous pression de commande pilote par au moins un canal d'alimentation de commande pilote (18a, 18b), servant à sa commande, **caractérisée par** au moins un module de distribution (12) selon l'une des revendications précédentes.
